# EUROPÄISCHE PATENTANMELDUNG

(11) **EP 1 227 182 A2**
(43) Veröffentlichungstag der Anmeldung: **31.07.2002**
(21) Anmeldenummer: 02000841.3
(22) Anmeldetag: 15.01.2002
(51) Int. Cl.: D06F 39/12

(54) **Untergestell für eine Waschmaschine**

(30) Priorität: 24.01.2001 DE 20101249 U
(71) Anmelder: Wirth, Veronika, 74360 Ilsfeld-Schozach (DE)
(72) Erfinder: Wirth, Veronika, 74360 Ilsfeld-Schozach (DE)
(74) Vertreter: Müller, Hans, Dipl.-Ing.

(57) **Zusammenfassung**

Ein Untergestell für eine Waschmaschine oder einen Wäschetrockner zeichnet sich durch ein tischartiges Gestell (10) und eine Ablagevorrichtung (52) für einen Wäschekorb aus. Die Ablagevorrichtung ist lageverstellbar am Gestell (10) befestigt und lässt sich vor das Gestell (10), etwa in Höhe seiner Oberseite, zur Aufnahme eines Wäschekorbes bringen.

## Beschreibung

Die Erfindung betrifft ein Untergestell, auf dem eine Waschmaschine oder ein Wäschetrockner aufgestellt werden können.

Waschmaschinen und Wäschetrockner haben ihre Befüll- und Entnahmeöffnung sehr häufig auf ihrer Vorderseite. Dadurch gestaltet sich ihr Befüllen mit Wäsche oder das Entnehmen von Wäsche aus solchen Waschmaschinen oder Wäschetrocknern recht umständlich; die das jeweilige Gerät benutzende Person muss sich relativ stark bücken, um Wäsche in das Gerät hinein zu geben bzw. aus demselben zu entnehmen. Sofern dabei auch noch Wäschekörbe gebückt hochgehoben oder umgesetzt werden müssen, wird das Bedienen dieser Geräte noch unfreundlicher.

### DARSTELLUNG DER ERFINDUNG

Ausgehend von diesem vorbekannten Stand der Technik liegt der Erfindung die Aufgabe zugrunde, eine Möglichkeit zum bedienungsfreundlichen Handhaben einer Waschmaschine und eines Wäschetrockners anzugeben.

Diese Erfindung ist durch die Merkmale des Anspruchs 1 gegeben. Sinnvolle Weiterbildungen der Erfindung sind Gegenstand von sich an diesen Anspruch anschließenden weiteren Ansprüchen.

Das für Waschmaschinen und Wäschetrockner vorgesehene erfindungsgemäße Untergestell hat den Vorteil, dass Waschmaschine und/oder Wäschetrockner höher im Raum positioniert werden können. Dadurch ist die Handhabung und Bedienung dieser Geräte gegenüber ihrer im Stand der Technik bekannten tieferen Platzierung wesentlich erleichtert. Eine Person muss sich beim Bedienen der Waschmaschine oder des Wäschetrockners nämlich vergleichsweise weniger bücken. Durch die an dem Untergestell ferner vorhandene Ablagevorrichtung für einen Wäschekorb ist auch das Absetzen, Umsetzen und Hochheben eines Wäschekorbes wesentlich rückenfreundlicher. Zusätzlich kann Stauraum im Bereich des Untergestells unter der Waschmaschine bzw. unter dem Wäschetrockner geschaffen werden, der zum Aufbewahren von Waschmitteln oder zum Zwischenlagern von Schmutzwäsche oder dergleichen genutzt werden kann.

Die zum Absetzen eines Wäschekorbes vorhandene Ablagevorrichtung kann als am Gestell befestigte Auflageplatte ausgebildet sein. Die Auflageplatte kann dabei in seitlichen Führungen des Gestells ausziehbar und kippsicher gehalten sein. Letzteres kann über einen an der Auflageplatte als Auszieh-Wegbegrenzer dienenden Anschlag technisch einfach verwirklicht werden. Der Anschlag kann beispielsweise über eine aus der Platte herausstehende Schraube oder dergleichen verwirklicht werden.

Waschmaschine und Trockner und damit auch ihre Untergestelle werden oftmals in Feuchträumen wie in Badezimmern oder Waschräumen aufgestellt. Es bietet sich damit an, die Auflageplatte des Untergestells mit feuchtigkeitsgeschützten Oberflächen auszugestalten.

Das tischartige Gestell besitzt gemäß einem Ausführungsbeispiel einen flach liegenden Rahmen, der zum Abstützen der auf dem Untergestell abgesetzten Waschmaschine oder des Wäschetrockners dient. Der Rahmen ist damit zumindest in den Eckbereichen der Waschmaschine bzw. des Wäschetrockners und damit in den Eckbereichen des Untergestells als solcher vorhanden. Der Rahmen besitzt seitlich hochstehende Wandbereiche, die ein seitliches Wegwandern der Waschmaschine oder des Wäschetrockners verhindern. Zusätzliche Haltestellen für die Waschmaschine oder den Wäschetrockner werden dadurch in aller Regel entbehrlich.

Aufgrund des relativ großen Gewichts einer Waschmaschine und der beim Betrieb derselben vorhandenen relativ großen Rotationskräfte ist auf eine stabile Ausführung des Untergestells und auf dessen ausreichender Biegesteifigkeit großer Wert zu legen. Da bei einer Waschmaschine horizontale, aus dem Betrieb derselben herrührende Kräfte insbesondere in seitlicher Richtung auftreten, ist insbesondere eine biegesteife Ausführung gegen seitliche horizontale Kräfte von großer Wichtigkeit. Diese Richtungsangaben beziehen sich auf eine Person, die vor der Waschmaschine steht. Sofern das Gestell nicht als räumliches Gebilde entsprechend biegesteif vom Hersteller zur Verfügung gestellt wird, sondern zusammenmontierbar ausgebildet ist, hat es sich als vorteilhaft herausgestellt, die beiden Vorderfüße oder auch die beiden Hinterfüße des Gestells als in sich biegesteifes Fußelement auszubilden. Seitlich auf das Gestell einwirkende Kräfte belasten dann insbesondere den aus den beiden Vorderfüßen bzw. den beiden Hinterfüßen gebildeten Fußelement-Rahmen, der durch beispielsweise die beiden Vorderfüße und ein die beiden Vorderfüße biegesteif miteinander verbindendes Rahmenteil gebildet sein kann. Zum Zusammenbauen des aus zwei solchen Fußelementen gebildeten Untergestells müssen dann noch die beiden Fußelemente - nämlich das die beiden Vorderfüße enthaltende Fußelement und das die beiden Hinterfüße enthaltende Fußelement - durch Rahmenteile zu dem räumlichen Untergestell zusammengebaut wie insbesondere zusammengeschraubt werden. Das jeweilige Fußelement nimmt dann als in sich biegesteifer U-Rahmen die seitlich auf ihn einwirkenden, in seiner Rahmenebene wirkenden Kräfte sicher auf.

Die Füße bzw. die Fußelemente können auch mit höhenausgleichenden Fußteilen ausgestattete Füße besitzen, die - wie das Ausführungsbeispiel zeigt - Hohlprofile oder auch Winkel- oder U-Profile sein können.

Der zur Abstützung der Waschmaschine oder eines Wäschetrockners vorgesehene flach liegende Rahmen des Untergestells kann nach einem auch in der Zeichnung dargestellten Ausführungsbeispiel aus fest miteinander verbundenen L-Profilen zusammengesetzt sein. Die L-Profile können dabei, je nach Ausführungsform des Untergestells, als fest miteinander verschweißter Rahmen als Montageeinheit vorhanden sein. Die Füße bzw. die Fußelemente können dann lose mit dem Rahmen der Verpackungseinheit zugefügt sein. Eine derartige Verpackungseinheit hat den Vorteil, dass ein in sich mehr oder weniger ebenflächiges, relativ flaches Paket als Transporteinheit ausgebildet werden kann. Der Transport des Untergestells wäre dann in Folge seines kleinen Verpackungsvolumens sehr wirtschaftlich. Wenn die Fußteile des Gestells nicht länger sind als das lichte Maß des flach liegenden Rahmens, können im Transportzustand des Untergestells die Fußteile bzw. Fußelemente oder Füße flach liegend auf dem Rahmen Platz sparend aufgelagert und zusammen mit dem Rahmen transportiert werden. Dies beeinflusst die Größe des Verpackungsvolumens auf günstige Weise.

### KURZE BESCHREIBUNG DER ZEICHNUNG

Die Erfindung wird im Folgenden anhand der in der Zeichnung dargestellten Ausführungsbeispiele näher beschrieben und erläutert. Es zeigen:
- Fig. 1: eine Ansicht eines Untergestells nach der Erfindung mit auf ihm aufruhender Waschmaschine,
- Fig. 2: eine perspektivische Ansicht des Untergestells von Fig. 1,
- Fig. 3: das Untergestell nach Fig. 1 oder 2 in seinem Transportzustand,
- Fig. 4: eine perspektivische, auseinander gezogene Darstellung des Untergestells von Fig. 2,
- Fig. 5: eine zweite Ausführungsform eines erfindungsgemäßen Untergestells,
- Fig. 6: eine perspektivische, auseinander gezogene Darstellung des Untergestells von Fig. 5.

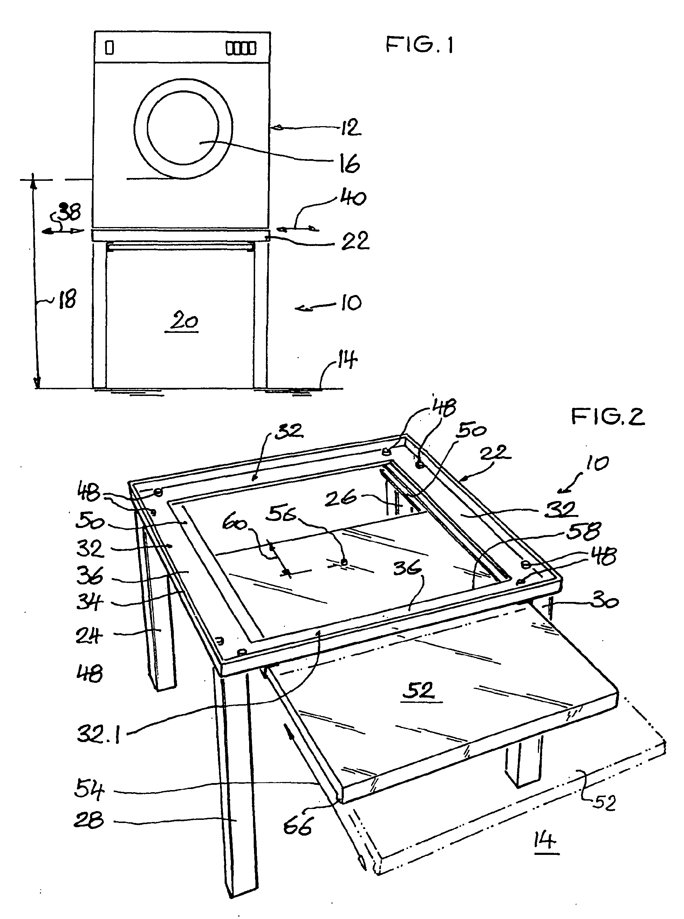

Auf einem tischartigen Untergestell 10 ruht eine Waschmaschine 12 auf (Fig. 1). Das Untergestell steht seinerseits auf einem Fußboden 14 auf, der Teil eines Kellerraumes oder eines sonstigen Raumes in einem beispielsweise Wohnhaus sein kann.

Durch das Untergestell 10 ist die Belade- oder Entnahmeöffnung 16 um das Höhenmaß 18 vom Fußboden 14 entfernt. Ohne das Untergestell 10 würde die Belade- oder Entnahmeöffnung 16 wesentlich weniger hoch über dem Fußboden 14 vorhanden sein. Der unter der Waschmaschine 12 vorhandene Raum 20 kann zum Unterstellen von Waschmitteln oder auch zum Zwischenlagern von Schmutzwäsche oder dergleichen verwendet werden.

Das Untergestell 10 besitzt einen flach liegenden Rahmen 22, der in seinen Eckpunkten auf zwei Hinterfüßen 24, 26 und zwei Vorderfüßen 28, 30 aufruht. Der Rahmen 22 ist mit den Füßen 24, 26, 28, 30 über Schraubverbindungen biegesteif verbunden.

Der Rahmen 22 besteht im vorliegenden Fall aus vier L-Profilen 32, die auf Gehrung geschnitten und miteinander in den Gehrungsfugen verschweißt sind. Der äußere Schenkel 34 jedes L-Profils 32 steht nach oben, in Richtung Waschmaschine 12, während der andere Schenkel 36 flach liegend positioniert ist. Die seitlichen Schenkel 34 der vier L-Profile 32 verhindern, dass die Waschmaschine 12 oder ein - in der Zeichnung nicht dargestellter - Wäschetrockner seitlich von dem Rahmen 22 herunter rutschen oder herunter wandern könnte. Letzteres könnte insbesondere beim Betrieb der Waschmaschine oder des Wäschetrockners durch auf das Untergestell 10 einwirkende seitliche Unwuchtkräfte (Doppelpfeile 38, 40, Fig. 1) erfolgen.

Jeder Fuß 24, 26, 28, 30 besitzt eine Kopfplatte 42 mit im vorliegenden Fall zwei Durchbohrungen 44. In den Eckbereichen des Rahmens 22 besitzen auch die Schenkel 36 der L-Profile 32 entsprechende zwei Durchbohrungen 46, so dass über die Kopfplatte 42 jede Stütze von unten fest an dem Rahmen 22 angeschraubt (Schrauben 48) werden kann.

Auf der Unterseite des Rahmens 22, seitlich innen neben den linken Füßen 24, 28 und in gleicher Weise seitlich innen neben den rechten Füßen 26, 30, ist jeweils eine U-Schiene 50 von unten an dem Rahmen 22 angeschraubt. Die Öffnungen dieser beiden U-Schienen 50 zeigen aufeinander. In den beiden U-Schienen 50 läßt sich eine Auflageplatte 52 nach vorne und hinten (Doppelpfeil 54, Fig. 2) verschieben. Durch eine im hinteren Teil der Auflageplatte 52 eingeschraubte Schraube 56, die oben aus der Auflageplatte 52 etwas hervorsteht, wird der Ausschubweg der Auflageplatte 52 begrenzt. Die Auflageplatte 52 läßt sich nur so weit herausziehen, bis die Schraube 56 an der inneren Kante 58 des Schenkels 36 des vorderen L-Profils 32.1 anschlägt. Mit ihrem Endbereich gemäß dem Maß 60 liegt die Auflageplatte 52 dann immer noch in den beiden seitlichen U-Schienen 50, so dass sie kippsicher in den Führungen 50 und damit am Untergestell 10 auch in ihrem maximal herausgezogenen Zustand gehalten ist. Auf der Auflageplatte 52 kann damit auch ein mit Wäsche voller Wäschekorb sicher abgestellt werden. Trotzdem ist die Zugänglichkeit zu dem Raum 20 unterhalb der Waschmaschine 12 noch vorhanden.

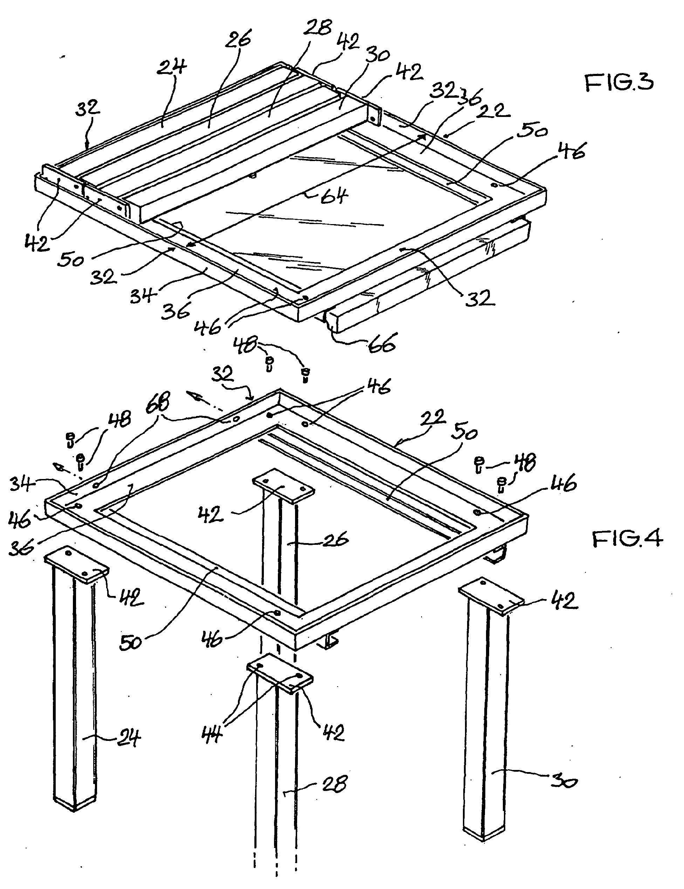

Um das Transportvolumen des Untergestells 10 möglichst klein zu halten, lassen sich die Füße 24, 26, 28, 30 von dem Rahmen 22 losschrauben. Die Länge bzw. Höhe der Füße 24, 26, 28, 30 einschließlich ihrer jeweiligen Kopfplatte 42 ist nicht größer als es dem lichten Maß 64 (Fig. 3) zwischen den gegenüberliegenden Winkelprofilen 32 entspricht. Auf diese Weise ist es möglich, die Füße Platz sparend in dem Rahmen 22 im Transportzustand des Untergestells 10 zu lagern.

Um die Auflageplatte 52 leicht raus- und reinschieben zu können, besitzt dieselbe an ihrem vorderen Endbereich eine nach unten auskragende Nase 66 als Griffleiste.

Der Rahmen 22 und damit das Untergestell 10 können durch geeignete Maßnahmen an einer Raumwand befestigt werden. In diesem Zusammenhang sind bei dem Rahmen 22 zwei Durchbohrungen 68 im Schenkel 34 des hinteren Profils 32 vorgesehen. Durch diese Durchbohrungen 68 hindurch kann mit entsprechenden Dübeln der Rahmen 22 an einer Hauswand oder dergleichen Wand befestigt werden.

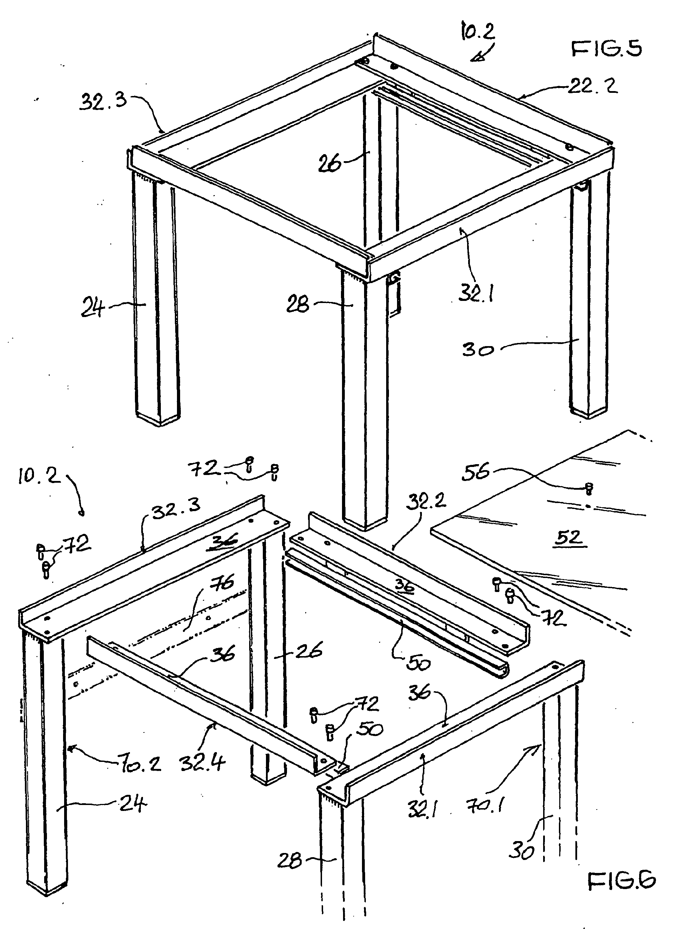

Bei dem in Fig. 5 und 6 dargestellten Untergestell 10.2 ist ein dem Rahmen 22 funktionell entsprechender Rahmen 22.2 vorhanden. Der Rahmen 22.2 besitzt ein hinteres Winkelprofil 32.3, das mit den Hinterfüßen 24, 26 fest verschweißt ist, und ein vorderes Winkelprofil 32.1, das mit den Vorderfüßen 28, 30 fest verschweißt ist. So bildet das vordere Winkelprofil 32.1 zusammen mit den beiden Vorderfüßen 28, 30 ein festes U-Rahmenelement 70.1. Ein vergleichbares Rahmenelement 70.2 bilden die beiden hinteren Füße 24, 26 zusammen mit dem hinteren Winkelprofil 32.3. Diese beiden Rahmenelemente 70.1, 70.2 können im Transportzustand flach liegend und damit Platz sparend transportiert werden. Die beiden Winkelprofile 32.3 und 32.1 werden mit den beiden seitlichen Winkelprofilen 32.2 und 32.4 mittels Verschraubungen 72 aneinander geschraubt. An der Unterseite der im aufgestellten Zustand horizontalen Schenkel 36 der beiden seitlichen Winkelprofile 32.2, 32.4 ist mit höhenmäßigem Abstand jeweils eine U-Schiene 50 befestigt. Der höhenmäßige Abstand ist deswegen erforderlich, weil die horizontalen Schenkel 36 der seitlichen Profile 32.2 bzw. 32.4 im vorliegenden Beispielsfall auf den horizontalen Schenkeln 36 des hinteren und des vorderen Winkelprofils 32.3, 32.1 aufliegen und die U-Schienen 50 bis unter dieses hintere und vordere Winkelprofil sich erstrecken. Sofern es erforderlich erscheint, kann ein Rahmenelement 70.1 oder 70.2 durch eine oder mehrere Versteifungsstreben 76 noch zusätzlich ausgesteift werden. Auch beim Untergestell 10.2 können ebenfalls wie beim Untergestell 10 konstruktive Maßnahmen vorgesehen werden, um das betreffende Gestell an einer seitlichen Raumwand oder dergleichen festen Wand anschrauben zu können.

## Patentansprüche

1. Untergestell für eine Waschmaschine oder einen Wäschetrockner,
**gekennzeichnet durch**
- ein tischartiges Gestell (10, 10.2) und
- eine Ablagevorrichtung (52) für einen Wäschekorb, die lageverstellbar am Gestell befestigt ist und die vor das Gestell, etwa in Höhe seiner Oberseite, zur Aufnahme eines Wäschekorbes bringbar ist.

2. Untergestell nach Anspruch 1,
**dadurch gekennzeichnet, dass**
- eine Auflageplatte (52) als Ablagevorrichtung für einen Wäschekorb ausziehbar am Gestell (10, 10.2) gehalten ist.

3. Untergestell nach einem der vorstehenden Ansprüche,
**dadurch gekennzeichnet, dass**
- die Auflageplatte (52) in seitlichen Führungen (50) des Gestells (10, 10.2) ausziehbar und kippsicher gehalten ist.

4. Untergestell nach Anspruch 3,
**dadurch gekennzeichnet, dass**
- ein Anschlag (56) als Auszieh-Wegbegrenzer an der Auflageplatte (52) vorhanden ist.

5. Untergestell nach Anspruch 4,
**dadurch gekennzeichnet, dass**
- der Anschlag eine Schraube (56) ist.

6. Untergestell nach einem der vorstehenden Ansprüche,
**dadurch gekennzeichnet, dass**
- die Ablagevorrichtung wie insbesondere die Auflageplatte (52) feuchtigkeitsgeschützte Oberflächen besitzt.

7. Untergestell nach einem der vorstehenden Ansprüche,
**dadurch gekennzeichnet, dass**
- ein flach liegender Rahmen (22, 22.1) zum Abstützen der Waschmaschine (12) oder des Wäschetrockners am Gestell (10, 10.2) ausgebildet ist.

8. Untergestell nach einem der vorstehenden Ansprüche,
**dadurch gekennzeichnet, dass**
- zwei Vorderfüße (28, 30) und/oder zwei Hinterfüße (24, 26) des Gestells (10, 10.2) jeweils als in sich biegesteifes Fußelement (70.1, 70.2) ausgebildet sind,
- das Fußteil (70.1, 70.2), und die restlichen Füße oder die beiden Fußteile (70.1, 70.2) aneinander befestigbar, wie insbesondere aneinander schraubbar sind.

9. Untergestell nach Anspruch 8,
**dadurch gekennzeichnet, dass**
- das Fußelement (70.1, 70.2) als einteiliger U-Rahmen ausgebildet ist.

10. Untergestell nach einem der vorstehenden Ansprüche,
**dadurch gekennzeichnet, dass**
- die Füße (24, 26, 28, 30) des tischartigen Untergestells Hohlprofile oder L- oder U-Profile sind.

11. Untergestell nach einem der vorstehenden Ansprüche,
**dadurch gekennzeichnet, dass**
- der Rahmen (22, 22.2) aus fest miteinander verschraubten L-Profilen (32) zusammengesetzt ist.

12. Untergestell nach Anspruch 11,
**dadurch gekennzeichnet, dass**
- die Füße (24, 26, 28, 30) und/oder die Fußelemente (70.1, 70.2) des Gestells (22, 22.2) nicht länger sind als das lichte Maß (64) zwischen gegenüberliegenden Schenkeln (34) des Rahmens (22), so dass sie im Transportzustand des Untergestells (10, 10.2) flach liegend auf dem Rahmen (22, 22.2), zwischen dessen äußeren Schenkeln (36), auflagerbar sind.

13. Untergestell nach einem der vorstehenden Ansprüche,
**dadurch gekennzeichnet, dass**
- im vorderen Bereich der Auflageplatte (52) eine Greifvorrichtung vorhanden ist.

14. Untergestell nach Anspruch 13,
**dadurch gekennzeichnet, dass**
- die Auflageplatte (52) an ihrem vorderen Ende in einer nach unten auskragenden Nase (66) endet.
